(19) Europäisches Patentamt
European Patent Office
Office européen des brevets

(11) **EP 3 394 564 B1**

(12) **FASCICULE DE BREVET EUROPEEN**

(45) Date de publication et mention
de la délivrance du brevet:
**08.04.2020 Bulletin 2020/15**

(21) Numéro de dépôt: **16816303.8**

(22) Date de dépôt: **22.12.2016**

(51) Int Cl.:
*G01C 19/5733* *(2012.01)*

(86) Numéro de dépôt international:
**PCT/EP2016/082418**

(87) Numéro de publication internationale:
**WO 2017/109093 (29.06.2017 Gazette 2017/26)**

(54) **SYSTÈME DE SUSPENSION D'UNE MASSE MOBILE COMPRENANT DES MOYENS DE LIAISON DE LA MASSE MOBILE À LINÉARITÉ OPTIMISÉE**

SYSTEM ZUR AUFHÄNGUNG EINER BEWEGLICHEN MASSE MIT VORRICHTUNG ZUR VERBINDUNG DER BEWEGLICHEN MASSE MIT OPTIMIERTER LINEARITÄT

SYSTEM FOR SUSPENDING A MOBILE MASS COMPRISING MEANS FOR LINKING THE MOBILE MASS WITH OPTIMISED LINEARITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2015 FR 1563264**

(43) Date de publication de la demande:
**31.10.2018 Bulletin 2018/44**

(73) Titulaires:
• **SAFRAN**
**75015 Paris (FR)**
• **Commissariat à l'Energie Atomique et aux Energies Alternatives**
**75015 Paris (FR)**

(72) Inventeurs:
• **ONFROY, Philippe, Serge, Claude**
**95100 Argenteuil (FR)**
• **COLIN, Mikaël**
**38000 Grenoble (FR)**
• **VERDOT, Thierry**
**38120 Saint Egreve (FR)**

(74) Mandataire: **Brevalex**
**95, rue d'Amsterdam**
**75378 Paris Cedex 8 (FR)**

(56) Documents cités:
**WO-A1-2014/177542     WO-A1-2015/178117**
**FR-A1- 2 983 574**

**EP 3 394 564 B1**

## Description

### DOMAINE TECHNIQUE

La présente invention se rapporte au domaine des systèmes comprenant une masse mobile dans un plan, tels que des capteurs angulaires inertiels à résonateur(s) vibrant(s). De tels capteurs, dits « à masse(s) discrète(s) », comprennent au moins une masse mobile, également dénommée « masse sismique », « corps d'épreuve » ou « masse d'épreuve », formant un résonateur oscillant dans un plan de mobilité, par rapport à un bâti du capteur, et dont l'analyse du mouvement renseigne sur un déplacement en rotation du bâti.

Ces capteurs peuvent fonctionner en mode « gyroscope » et/ou « gyromètre » et peuvent être de dimensions variées. Le mode « gyromètre » repose sur la mesure de la force de Coriolis subie par la masse mobile sous l'effet d'un déplacement en rotation du bâti du capteur, tandis que le mode « gyroscope » repose sur la mesure d'une dérive angulaire d'une direction d'oscillations de la masse mobile sous l'effet d'un tel déplacement en rotation.

Ces capteurs sont notamment appréciés pour leur aptitude à la miniaturisation et sont ainsi notamment utilisés sous la forme de micro-capteurs électromécaniques (MEMS).

L'invention concerne également d'autres types de systèmes pouvant par exemple constituer des actionneurs, des interrupteurs, ou des résonateurs.

### ÉTAT DE LA TECHNIQUE ANTÉRIEURE

Dans un capteur angulaire inertiel à résonateur(s) vibrant(s), le (ou chaque) résonateur prend la forme d'une masse mobile suspendue par des moyens élastiques à un support de sorte que la masse mobile puisse osciller dans un plan, ci-après dénommé « plan de mobilité ».

Une grande variété de capteurs de ce type a vu le jour. Dans certains de ces capteurs, notamment ceux destinés à pouvoir fonctionner en mode « gyroscope », c'est-à-dire ceux destinés à mesurer directement une position angulaire, la masse mobile présente deux degrés de liberté en translation dans le plan de mobilité et un degré de liberté en rotation autour de son centre d'inertie dans ce même plan. L'oscillation de la masse mobile est alors entretenue au moyen d'actionneurs agissant selon deux directions, généralement orthogonales l'une à l'autre. De plus, un déplacement en rotation du bâti du capteur provoque un décalage angulaire de la direction des oscillations de la masse mobile. Cette dernière doit donc pouvoir se déplacer indifféremment dans n'importe quelle direction du plan de mobilité.

A cet effet, les moyens de suspension de la masse mobile doivent être compatibles avec les deux degrés de liberté de celle-ci.

De plus, il est souhaitable que l'effort requis pour entretenir l'oscillation de la masse mobile soit linéaire en fonction de l'amplitude, pour ne pas générer de défaut de nature à perturber le fonctionnement du capteur.

En effet, une non-linéarité du deuxième ordre se traduit par une force moyenne non nulle, source de précontrainte dans la structure du capteur, tandis qu'une non-linéarité du troisième ordre se traduit par un défaut d'isochronisme, qui se manifeste par une raideur moyenne dépendant de l'amplitude, et qui a donc pour conséquence une variation de la fréquence d'oscillation en fonction de l'amplitude d'oscillation.

Les mêmes considérations s'appliquent aux moyens de couplage élastique utilisés pour assurer un couplage élastique des déplacements respectifs de plusieurs masses mobiles présentes dans certains capteurs.

WO 2014/177542 A1 divulgue un système de suspension d'une masse mobile dans lequel les éléments de liaison reliant la masse mobile au support sont formés d'au moins deux ressorts.

WO 2015/178117 A1 divulgue un système de suspension d'une masse mobile dans lequel les éléments de liaison 114 reliant la masse mobile au support sont en partie centrés par rapport à un premier plan et en partie centrés par rapport à un deuxième plan, lesdits plans étant orthogonaux au plan de mobilité et sécants.

Dans la suite de la présente description, les expressions « moyens de liaison », « dispositif de liaison » et « élément de liaison » désignent indifféremment des moyens de suspension, dispositifs de suspension ou éléments de suspension, et des moyens de couplage élastique, dispositifs de couplage élastique ou éléments de couplage élastique. Il est clair pour l'homme du métier que les notions de suspension et de couplage élastique impliquent une liaison directe entre deux éléments.

### EXPOSÉ DE L'INVENTION

L'invention a notamment pour objet un système équipé de moyens de liaison à deux degrés de liberté, présentant au moins des propriétés de linéarité améliorées, et présentant de préférence également des propriétés d'isotropie améliorées.

L'invention propose à cet effet un système, comprenant au moins une masse mobile ainsi que des moyens de liaison reliant la masse mobile à un autre élément du système et autorisant la masse mobile à se mouvoir dans un plan, dit « plan de mobilité », relativement audit autre élément du système.

Selon l'invention, les moyens de liaison comprennent un premier dispositif de liaison comportant un premier élément de liaison relié à la masse mobile, un deuxième élément de liaison relié audit autre élément du capteur, et un bloc de liaison reliant le premier élément de liaison au deuxième élément de liaison.

De plus, lorsque la masse mobile est dans une position de repos, les premier et deuxième éléments de liaison sont respectivement centrés par rapport à un premier plan et un deuxième plan qui sont orthogonaux au plan de mobilité et qui sont sécants.

En outre, le premier élément de liaison est déformable en flexion dans le plan de mobilité de manière à permettre un déplacement relatif de la masse mobile par rapport au bloc de liaison selon une première direction orthogonale au premier plan, à partir de la position de repos, et le deuxième élément de liaison est déformable en flexion dans le plan de mobilité de manière à permettre un déplacement relatif dudit autre élément du système par rapport au bloc de liaison selon une deuxième direction orthogonale au deuxième plan, à partir de la position de repos.

De plus, au moins l'un des premier et deuxième éléments de liaison est formé d'au moins deux ressorts ayant chacun une première extrémité reliée à la masse mobile, respectivement audit autre élément du système, et une seconde extrémité reliée au bloc de liaison.

La configuration du premier dispositif de liaison confère à ce dernier de bonnes propriétés de linéarité, comme cela apparaîtra plus clairement dans ce qui suit. L'invention permet ainsi de répondre à la problématique exposée ci-dessus.

Il est clair pour l'homme du métier que la déformation en flexion du premier élément de liaison dans le plan de mobilité induit un déplacement de la masse mobile qui, au premier ordre, s'effectue uniquement selon la première direction précitée. De manière analogue, la déformation en flexion du deuxième élément de liaison dans le plan de mobilité induit un déplacement de la masse mobile qui, au premier ordre, s'effectue uniquement selon la deuxième direction précitée.

Il faut comprendre, par « déplacement relatif de la masse mobile par rapport au bloc de liaison », la possibilité pour la masse mobile de se déplacer dans un référentiel fixe par rapport au bloc de liaison. De même, il faut comprendre, par « déplacement relatif dudit autre élément du système par rapport au bloc de liaison », la possibilité pour l'autre élément du système de se déplacer dans le référentiel fixe par rapport au bloc de liaison. En particulier, cette terminologie ne fait pas obstacle à ce que l'autre élément du système soit fixe par rapport à un bâti du système, et donc à ce que ce soit le bloc de liaison qui se déplace par rapport à l'autre élément du système si l'on se place dans un référentiel fixe par rapport au bâti du système.

Par « position de repos », il faut comprendre une position stable de la masse mobile, qui est de préférence une position dans laquelle les premier et deuxième éléments de liaison ne subissent pas de contrainte en flexion dans le plan de mobilité.

De préférence, l'autre élément de liaison est également formé d'au moins deux ressorts ayant chacun une première extrémité reliée audit autre élément du système, respectivement à la masse mobile, et une seconde extrémité reliée au bloc de liaison.

Ainsi, dans des modes de réalisation préférés de l'invention, le premier élément de liaison est formé d'au moins deux ressorts aptes à se déformer en flexion dans le plan de mobilité et ayant chacun une première extrémité reliée à la masse mobile et une seconde extrémité reliée au bloc de liaison ; et le deuxième élément de liaison est formé d'au moins deux ressorts aptes à se déformer en flexion dans le plan de mobilité et ayant chacun une première extrémité reliée audit autre élément du système et une seconde extrémité reliée au bloc de liaison.

Le dispositif de liaison peut ainsi présenter des propriétés de linéarité optimales.

De préférence, les ressorts du premier élément de liaison sont semblables l'un à l'autre. Les ressorts du deuxième élément de liaison sont de préférence également semblables l'un à l'autre.

Dans un premier mode de réalisation préféré de l'invention, chacun des ressorts de l'un au moins des premier et deuxième éléments de liaison est en forme de lame ou de poutre rectiligne.

Le nombre de ressorts de chacun des premier et deuxième éléments de liaison peut être égal à deux.

En variante, le nombre de ressorts de l'un au moins des premier et deuxième éléments de liaison peut être supérieur ou égal à trois.

L'augmentation du nombre de ressorts permet d'accroître la raideur du dispositif de liaison.

Dans un deuxième mode de réalisation préféré de l'invention, l'un au moins des premier et deuxième éléments de liaison s'étend entre deux extensions correspondantes du bloc de liaison, et les ressorts de cet élément de liaison sont au nombre de deux et sont chacun en forme de lame ou de poutre repliée dont la première extrémité est reliée à la masse mobile ou audit autre élément du système et dont la seconde extrémité est reliée à l'une des extensions du bloc de liaison.

Dans ce cas, les deux ressorts précités sont préférentiellement symétriques l'un de l'autre par rapport à un plan orthogonal au plan de mobilité.

Dans un troisième mode de réalisation préféré de l'invention, les ressorts de l'un au moins des premier et deuxième éléments de liaison sont au nombre de deux et s'étendent de part et d'autre d'une extension de la masse mobile ou dudit autre élément du système, et ces ressorts sont chacun en forme de lame ou de poutre repliée dont la première extrémité est reliée à l'extension de la masse mobile ou dudit autre élément du système et dont la seconde extrémité est reliée au bloc de liaison.

Dans ce cas également, les deux ressorts sont préférentiellement symétriques l'un de l'autre par rapport à un plan orthogonal au plan de mobilité.

Les deuxième et troisième modes de réalisation de l'invention reposent ainsi sur l'utilisation de ressorts repliés, parfois dénommés « ressorts *folded* » d'après la terminologie anglo-saxonne *« folded springs ».*

De manière générale, les première et deuxième directions font de préférence entre elles un angle de 90 degrés.

Le cas échéant, les premier et deuxième plans du premier dispositif de liaison font donc de préférence entre eux un angle de 90 degrés lorsque la masse mobile est dans la position de repos.

De plus, le premier élément de liaison et le deuxième élément de liaison du premier dispositif de liaison sont de préférence symétriques l'un de l'autre par rapport à un troisième plan orthogonal au plan de mobilité.

Par ailleurs, la masse mobile présente avantageusement un premier plan de symétrie et un deuxième plan de symétrie orthogonaux au plan de mobilité et respectivement orthogonaux à la première direction et à la deuxième direction.

Plus généralement, la masse mobile présente de préférence une forme invariante par rotation de 90 degrés autour de son centre d'inertie.

En outre, les moyens de liaison comprennent de préférence un deuxième dispositif de liaison semblable au premier dispositif de liaison et agencé de sorte que le premier élément de liaison du deuxième dispositif de liaison s'étende parallèlement au deuxième élément de liaison du premier dispositif de liaison, et de sorte que le premier et le deuxième dispositifs de liaison soient symétriques l'un de l'autre par rapport à un quatrième plan orthogonal au plan de mobilité.

Le quatrième plan est de préférence également orthogonal au troisième plan.

De plus, la masse mobile est de préférence symétrique par rapport au quatrième plan.

En outre, les moyens de liaison comprennent de préférence des troisièmes dispositifs de liaison semblables au premier dispositif de liaison et tels que l'ensemble des premier, deuxième et troisièmes dispositifs de liaison forme un premier motif invariant par rotation de 90 degrés autour du centre d'inertie de la masse mobile.

Les moyens de liaison présentent ainsi des propriétés de symétrie leur conférant des performances optimales en matière d'isotropie, comme cela apparaîtra plus clairement dans ce qui suit. De plus, les moyens de liaison permettent ainsi d'annihiler les effets de couple découlant de l'application d'une force en un point de la masse mobile autre que son centre d'inertie.

Par ailleurs, la masse mobile présente avantageusement une section carrée dans le plan de mobilité, dont une diagonale appartient audit quatrième plan et dont deux côtés adjacents sont respectivement parallèles aux premier et deuxième plans de symétrie.

En variante, la masse mobile peut présenter une section d'un autre type, par exemple circulaire, ou quelconque, en fonction du type d'application prévue pour le système.

Dans diverses applications avantageuses, le système peut en outre comprendre des moyens d'actionnement pour imprimer des oscillations à la masse mobile dans le plan de mobilité.

Dans une application particulièrement avantageuse, le système est un capteur angulaire inertiel et comprend donc en outre des moyens de détection pour mesurer le déplacement de la masse mobile dans le plan de mobilité.

Le système comprend de préférence un support qui forme ledit autre élément du système, et auquel les moyens d'actionnement sont fixés.

Le support peut être un bâti du système ou, en variante, le support peut être monté mobile par rapport à un bâti du système.

En variante ou de manière complémentaire, le système peut comprendre une autre masse mobile qui forme ledit autre élément du système.

Dans ce cas, les moyens d'actionnement peuvent être interposés entre les deux masses mobiles, et/ou le cas échéant, entre le support et chacune des masses mobiles.

De plus, le système est avantageusement configuré pour appliquer des efforts opposés aux deux masses mobiles.

Le système peut ainsi fonctionner d'une manière particulièrement bien équilibrée. L'équilibrage du système, notamment lorsque ce dernier est un capteur angulaire inertiel, permet d'accroître la précision et la stabilité dans le temps d'un tel capteur.

**BRÈVE DESCRIPTION DES DESSINS**

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

- la figure 1 est une vue schématique partielle de dessus d'un capteur angulaire inertiel selon un premier mode de réalisation préféré de l'invention ;
- la figure 1A est une vue à plus grande échelle du détail IA de la figure 1 ;
- la figure 2 est une vue schématique à plus grande échelle d'un dispositif de liaison appartenant au capteur de la figure 1 ;
- les figures 3A à 3C sont des vues semblables à la figure 2, illustrant d'autres types de dispositifs de liaison qui ne font pas partie de l'invention, et sont fournies uniquement à des fins didactiques ;
- les figures 4 à 6 sont des vues semblables à la figure 2, illustrant respectivement des dispositifs de liaison de systèmes selon d'autres modes de réalisation de l'invention.

Dans l'ensemble de ces figures, des références identiques peuvent désigner des éléments identiques ou analogues.

## EXPOSÉ DÉTAILLÉ DE MODES DE RÉALISATION PRÉFÉRÉS

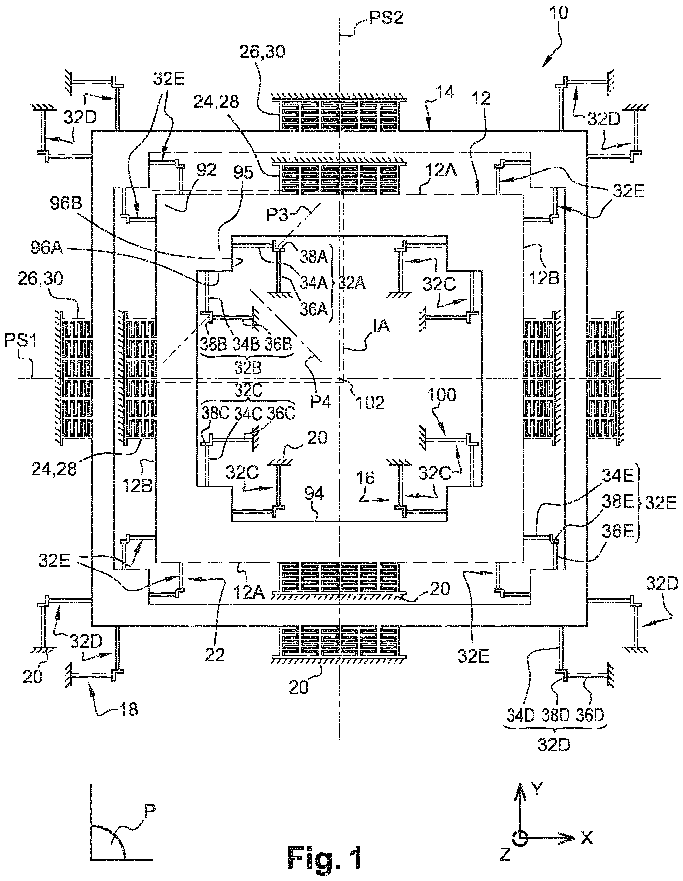

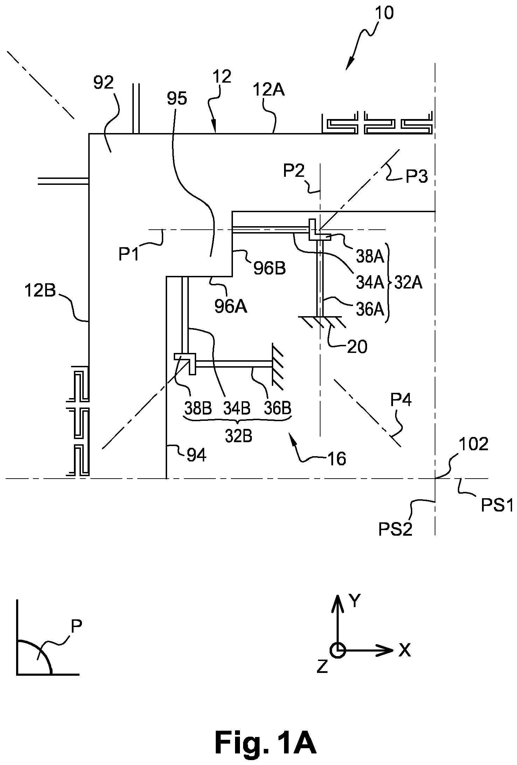

La figure 1 illustre certains composants d'un système 10, formant par exemple un capteur angulaire inertiel, selon un premier mode de réalisation préféré de l'invention. Cette figure montre en particulier une masse mobile 12, une autre masse mobile 14, des moyens de suspension 16, 18 pour suspendre respectivement chacune des masses mobiles 12, 14 à un support 20, et des moyens de couplage élastique 22 reliant l'une à l'autre les deux masses mobiles 12 et 14.

Le capteur angulaire inertiel 10 illustré est un capteur de type MEMS, mais il est à noter que l'invention est applicable à des capteurs de toutes dimensions, et plus généralement à d'autres types de systèmes.

Ainsi, le support 20 s'étend sous le plan de la figure 1, de sorte que seuls des pavés d'ancrage des différents éléments à ce support 20 sont visibles, sous la forme de hachures, sur cette figure.

Dans la terminologie adoptée dans les revendications annexées, les moyens de suspension 16, 18 et les moyens de couplage élastique 22 constituent des exemples de « moyens de liaison » reliant chacune des masses mobiles 12, 14 à un autre élément du système. En effet, les moyens de suspension 16, 18 relient respectivement les masses mobiles 12, 14 au support 20, tandis que les moyens de couplage élastique 22 relient chacune des masses mobiles 12, 14 à l'autre masse mobile 14, 12.

D'une manière générale, les moyens de liaison 16, 18, 22 présentent deux degrés de liberté en translation et un degré de liberté en rotation, dans le plan de la figure 1, portant la référence « P ». Ce plan P est ci-après dénommé « plan de mobilité » du fait que les moyens de liaison 16, 18, 22 permettent aux masses mobiles 12, 14 de se mouvoir dans ce plan et empêchent les masses mobiles de se mouvoir hors de ce plan. De tels déplacements des masses mobiles dans le plan de mobilité sont bien entendu limités en amplitude du fait de la constitution des moyens de liaison précités, comme cela apparaîtra plus clairement dans ce qui suit.

Dans la présente description, on définit un repère orthonormé de directions X, Y, et Z, dans lequel les directions X et Y appartiennent au plan de mobilité P.

Le système 10 comporte en outre des moyens d'actionnement 24, 26 pour imprimer des oscillations respectivement aux deux masses mobiles 12, 14 dans le plan de mobilité P, et des moyens de détection 28, 30 pour mesurer le déplacement de chaque masse mobile 12, 14 dans ce même plan P et en déduire un angle ou une vitesse de rotation du support 20 par rapport à un référentiel inertiel, d'une manière connue en soi. Les moyens d'actionnement 24, 26 et de détection 28, 30 sont par exemple constitués d'une pluralité de paires de peignes électrostatiques interdigités. Dans l'exemple illustré, chaque paire de peignes électrostatiques interdigités appartient à la fois aux moyens d'actionnement 24, 26 et aux moyens de détection 28, 30. Chaque paire de peignes électrostatiques interdigités fonctionne en effet alternativement en mode actionneur et en mode détecteur, l'alternance s'effectuant à une fréquence supérieure à la fréquence des oscillations des masses mobiles 12, 14. En variante, les moyens d'actionnement 24, 26 et de détection 28, 30 peuvent être distincts.

Dans l'exemple illustré, les moyens d'actionnement 24, 26 agissent selon les directions X et Y, et les moyens de détection 28, 30 sont sensibles aux déplacements des masses mobiles selon les directions X et Y.

Les moyens de suspension 16 comprennent un premier dispositif de liaison 32A comportant un premier élément de liaison 34A, un deuxième élément de liaison 36A, et un bloc de liaison 38A reliant le premier élément de liaison 34A au deuxième élément de liaison 36A.

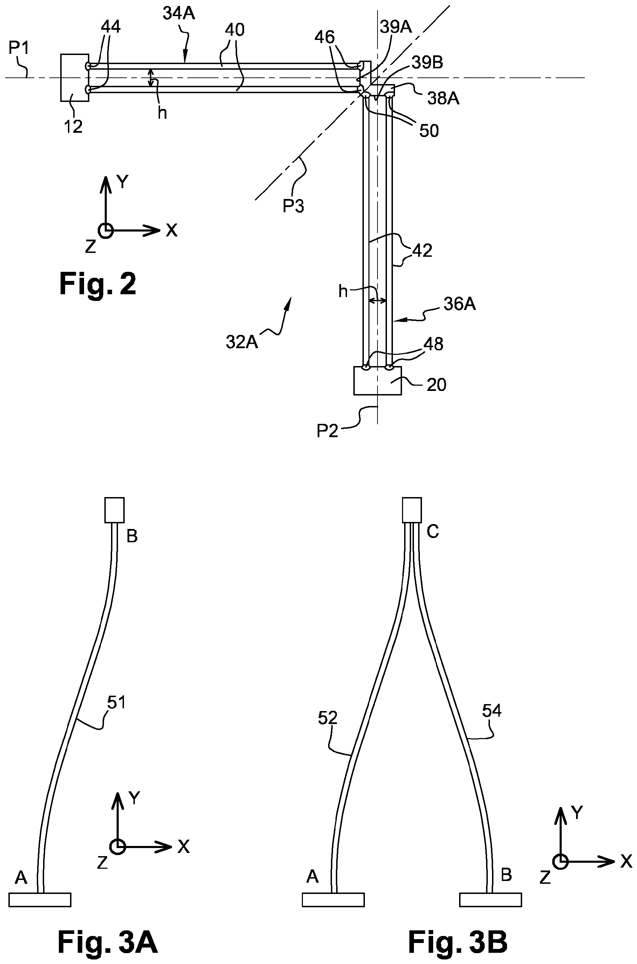

Comme le montre la figure 2, le premier élément de liaison 34A est formé de deux ressorts 40 aptes à se déformer en flexion dans le plan de mobilité P, et le deuxième élément de liaison 36A est formé de deux ressorts 42 également aptes à se déformer en flexion dans le plan de mobilité P.

En variante, l'un seulement des éléments de liaisons 34A et 36A peut être formé de plusieurs ressorts, sans sortir du cadre de l'invention.

Dans le premier mode de réalisation de l'invention, les ressorts 40 et 42 prennent la forme de ressorts à lame ou de poutres. La longueur des ressorts 40, 42 est ainsi leur dimension selon les axes X et Y respectivement, leur épaisseur est leur dimension selon les axes Y et X respectivement, et leur largeur est leur dimension selon l'axe Z correspondant à la direction de l'épaisseur ou de la profondeur du système 10.

Le premier dispositif de liaison 32A illustré sur la figure 2, fait partie des moyens de suspension 16 de la masse mobile 12 (figure 1). De ce fait, les ressorts 40 du premier élément de liaison 34A présentent chacun une première extrémité 44 reliée à la masse mobile 12 et une seconde extrémité 46 reliée au bloc de liaison 38A, tandis que les ressorts 42 du deuxième élément de liaison 36A présentent chacun une première extrémité 48 reliée au support 20 et une seconde extrémité 50 reliée au bloc de liaison 38A.

L'orientation de chacun des éléments de liaison 34A et 36A est telle que les déformations en flexion du premier élément de liaison 34A permettent à la masse mobile 12 de se déplacer par rapport au bloc de liaison 38A selon une première direction, à savoir la direction Y, à partir d'une position dans laquelle la masse mobile 12 se trouve lorsque le premier élément de liaison 34A est dans un état de repos (c'est-à-dire de non déformation en flexion), tandis que les déformations en flexion du deuxième élément de liaison 36A permettent au bloc de liaison 38A de se déplacer par rapport au support 20 selon une deuxième direction, à savoir la direction X, à partir d'une position dans laquelle le deuxième élément de liaison 36A est dans un état de repos. L'homme du métier comprendra par-là qu'au premier ordre, la masse mobile 12 ne se déplace que selon la première direction précitée sous l'effet d'une déformation en flexion du premier élément de liaison 34A, et ne se déplace que selon la deuxième direction précitée sous l'effet d'une déformation en flexion du deuxième élément de liaison 36A.

En particulier, lorsque la masse mobile 12 est dans une position de repos dans laquelle les ressorts 40, 42 ne sont pas sollicités en flexion, comme illustré sur la figure 1, le premier élément de liaison 34A est centré par rapport à un premier plan P1 (figures 1A et 2) et le deuxième élément de liaison 36A est centré par rapport à un deuxième plan P2, les plans P1 et P2 étant orthogonaux au plan de mobilité P et étant sécants. Dans les modes de réalisation illustrés, les plans P1 et P2 sont avantageusement orthogonaux l'une à l'autre.

Par ailleurs, le bloc de liaison 38A présente deux faces 39A, 39B orthogonales l'une à l'autre et auxquelles sont respectivement raccordés les premier et deuxième éléments de liaison 34A, 36A. Dans le cas où l'épaisseur du bloc de liaison 38A selon la direction Z est particulièrement réduite, les faces précitées peuvent être assimilées à des bords du bloc de liaison.

Ainsi, les deuxièmes extrémités 46 respectives des ressorts 40 du premier élément de liaison 34A sont raccordées à une première des deux faces 39A, tandis que les deuxièmes extrémités 50 respectives des ressorts 42 du deuxième élément de liaison 36A sont raccordées à une deuxième des deux faces 39B.

Dans l'exemple illustré sur la figure 2, le bloc de liaison 38A est un élément en forme d'équerre. La forme du bloc de liaison 38A peut bien entendu être différente sans sortir du cadre de l'invention, par exemple carrée, rectangulaire, ou encore triangulaire. De plus, le bloc de liaison 38A est avantageusement ajouré, c'est-à-dire traversé d'orifices s'étendant selon la direction Z, ce qui permet de réduire la masse de ce bloc de liaison. Dans le cas d'un système de type MEMS, le bloc de liaison 38A peut en particulier être constitué d'une jonction de surépaisseurs respectives des extrémités 46, 50 des ressorts, ou par un dépôt de matériau ayant un module d'Young approprié de manière à relier lesdites extrémités.

D'une manière générale, le premier dispositif de liaison 32A présente donc notamment la particularité de comporter deux éléments de liaison 34A, 36A reliés mutuellement par le bloc de liaison 38A. Il faut comprendre par « bloc de liaison » un élément présentant une rigidité en flexion dans le plan de mobilité P supérieure à celle des éléments de liaison 34A, 36A. En pratique, il est préférable que la flexibilité du bloc de liaison dans le plan de mobilité P soit négligeable par rapport à celle des éléments de liaison 34A, 36A.

Il est à noter que le bloc de liaison 38A n'est relié à la masse mobile 12 et audit autre élément du système (c'est-à-dire au support 20 dans le cas du premier dispositif de liaison 32A) que par l'intermédiaire des éléments de liaison 34A, 36A. Ce bloc de liaison 38A est donc lui-même mobile dans le plan de mobilité P moyennant les déformations en flexion des éléments de liaison 34A, 36A.

La configuration à deux ressorts (ou davantage) agencés en parallèle (c'est-à-dire avec chacun des ressorts reliant le bloc de liaison 38A à un même élément) permet de limiter la tendance du bloc de liaison 38A à se déplacer en rotation dans le plan de mobilité sous l'effet d'une sollicitation en flexion, dans ce même plan, du premier élément de liaison 34A ou du deuxième élément de liaison 36A, induite par l'application d'un effort sur l'une des premières extrémités 44 et 48 et/ou sur l'une des secondes extrémités 46, 50.

Le bloc de liaison 38A conserve ainsi une orientation sensiblement constante dans le plan de mobilité P quelle que soit la direction des efforts appliqués au dispositif de liaison 32A, dans la mesure ou de tels efforts n'engendrent que des déplacements d'amplitude modérée, ce qui est notamment le cas en ce qui concerne les oscillations induites par les moyens d'actionnement 24, 26 dans le cadre d'un fonctionnement du capteur en mode « gyroscope » ou en mode « gyromètre ».

Comme cela apparaîtra plus clairement dans ce qui suit, les moyens de suspension 16 comprennent en outre un deuxième dispositif de liaison 32B et des troisièmes dispositifs de liaison 32C, les moyens de suspension 18 comprennent des quatrièmes dispositifs de liaison 32D, et les moyens de couplage élastique 22 comprennent des cinquièmes dispositifs de liaison 32E. Ces dispositifs 32B, 32C, 32D, 32E sont semblables au premier dispositif de liaison 32A et comportent donc chacun un premier élément de liaison, portant respectivement la référence 34B, 34C, 34D, 34E, un deuxième élément de liaison, portant respectivement la référence 36B, 36C, 36D, 36E, et un bloc de liaison, portant respectivement la référence 38B, 38C, 38D, 38E.

Bien entendu, le deuxième dispositif de liaison 32B et les troisièmes dispositifs de liaison 32C sont reliés à la masse mobile 12 et au support 20 de la même manière que le premier dispositif de liaison 32A. En ce qui concerne les quatrièmes dispositifs de liaison 32D formant les moyens de suspension 18 de l'autre masse mobile 14, la première extrémité 44 de chaque ressort 40 du premier élément de liaison 34D est reliée à cette masse mobile 14. Enfin, en ce qui concerne les cinquièmes dispositifs de liaison 32E formant les moyens de couplage élastique 22, la première extrémité 44 de chaque ressort 40 du premier élément de liaison 34E est reliée à la masse mobile 12 tandis que la première extrémité 48 de chaque ressort 42 du deuxième élément de liaison 36E est reliée à l'autre masse mobile 14.

Dans l'ensemble de la présente description, les propriétés communes aux dispositifs de liaison 32A, 32B, 32C, 32D, 32E sont décrites en référence au premier dispositif de liaison 32A.

L'intérêt de la configuration des moyens de liaison selon l'invention sera mieux compris en considérant les figures 3A à 3C qui illustrent d'autres types de dispositifs de liaison (qui ne font pas partie de l'invention).

La figure 3A illustre une poutre console 51 encastrée en l'une de ses extrémités, référencée B, et dont l'autre extrémité A est déplaçable selon l'axe X. L'extrémité B étant donc fixe, si l'on impose un déplacement nul selon l'axe Y aux extrémités A et B, un déplacement selon l'axe X de l'extrémité A provoque un allongement de la poutre qui crée un effort selon l'axe Y. Cela génère une forte non-linéarité de l'effort selon l'axe X au niveau de l'extrémité A en fonction du déplacement de cette dernière selon l'axe X. Cette analyse peut être rapprochée du modèle de la corde vibrante dont la raideur, et donc la fréquence propre, varie en fonction de la tension axiale.

Si l'on autorise le déplacement de l'extrémité B selon l'axe Y, l'effort selon cet axe devient nul. Dans ce cas, la non-linéarité de l'effort selon l'axe X en A en fonction du déplacement de A est fortement diminuée, de sorte qu'il ne subsiste plus qu'une non-linéarité purement géométrique.

C'est pourquoi, les ressorts uni-axiaux habituellement utilisés sont des ressorts repliés, couramment dénommés ressorts *« folded »* d'après la terminologie anglo-saxonne, et dont le principe est illustré par la figure 3B. Cette figure montre en effet deux ressorts à lame 52 et 54 (pouvant être assimilés à deux poutres dans le plan), raccordés l'un à l'autre par l'une de leurs extrémités C, et ayant leurs deux autres extrémités respectives séparées. Ces deux ressorts sont en général deux portions d'un seul et même ressort, auquel cas l'extrémité C est obtenue en pliant le ressort, d'où le nom de ce type de ressorts. Dans l'exemple de la figure 3B, le ressort *« folded »* est du type uni-axial.

L'extrémité C est libre de se déplacer selon l'axe Y, tandis que l'extrémité A est là encore contrainte à se déplacer selon l'axe X, et l'extrémité B est maintenue fixe selon les deux axes X et Y. Par conséquent, les efforts selon l'axe Y dans les deux ressorts ou poutres 52 et 54 sont nuls, un effort selon l'axe X en A ne présente plus qu'une non-linéarité purement géométrique, sans précontraintes en fonction du déplacement de l'extrémité A selon l'axe X. Par rapport à une poutre simple, le ressort *« folded »* permet ainsi une réduction très importante de la non-linéarité d'ordre 3, également dénommée « non-linéarité cubique ».

Toutefois, ce principe ne peut être étendu directement aux suspensions à deux axes.

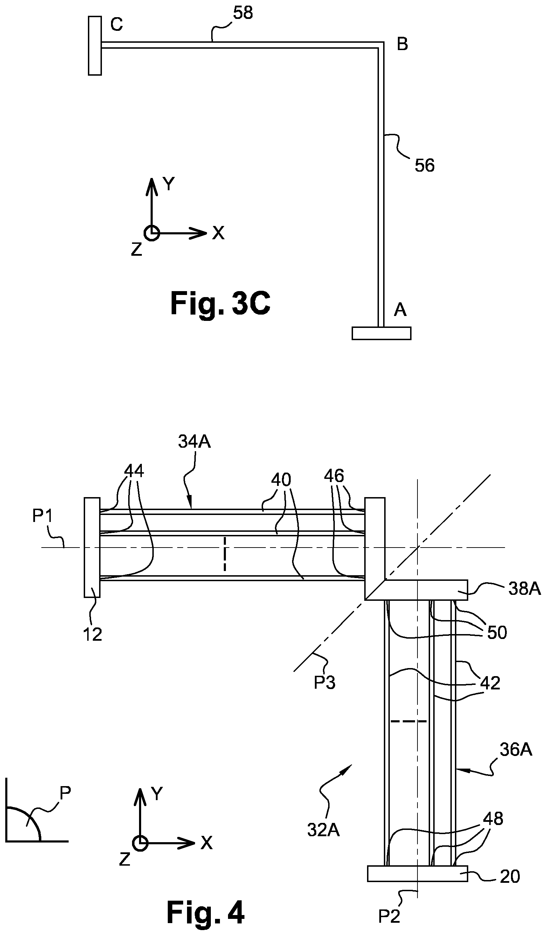

En effet, la figure 3C illustre une suspension à deux axes formée de deux ressorts ou poutres 56 et 58 orthogonales l'une à l'autre. La raideur de l'encastrement de la poutre 56 au niveau de l'extrémité B selon l'axe Y, induite par l'autre poutre 58, est nettement plus faible que celle de la poutre console de la figure 3A, du fait de la flexibilité de la poutre 58 selon l'axe Y. Il en résulte une forte diminution des non-linéarités liées aux précontraintes. Le rapport entre les non-linéarités liées aux précontraintes en ce qui concerne respectivement la suspension à deux axes de la figure 3C, et la poutre console encastrée de la figure 3A, est de l'ordre du rapport de la raideur en flexion sur la raideur en compression d'une poutre.

Toutefois, avec ce type de suspension, un déplacement selon l'axe X de l'extrémité A induit un déplacement en rotation non négligeable de l'extrémité B, ce qui entraîne une non-linéarité purement géométrique importante.

Revenons maintenant au dispositif de liaison 32A de la figure 2. Dans ce dispositif, la raideur en rotation au niveau du bloc de liaison 38A est réduite du fait de la multiplicité des ressorts formant le premier élément de liaison 34A et le deuxième élément de liaison 36A. Cette raideur en rotation dépend notamment de l'empattement h entre les ressorts d'un même élément de liaison.

Du fait des non-linéarités géométriques, un déplacement relatif selon l'axe Y de la région d'ancrage des premières extrémités 44 à la masse mobile 12 entraine un déplacement horizontal du bloc de liaison 38A, d'où il résulte une contrainte selon l'axe X dans les ressorts 40, induite par la flexion des ressorts 42. Mais comme dans le cas de la suspension de la figure 3C, cette contrainte est beaucoup plus faible que celle que subirait la poutre console encastrée de la figure 3A, car la raideur en flexion d'une poutre est elle-même beaucoup plus faible que sa raideur en traction/compression.

Pour comparer les dispositifs respectifs des figures 2 et 3A-3C, des calculs non linéaires par éléments finis ont été effectués, dans le cadre d'un dispositif de type « MEMS ».

Dans le cadre de ces calculs, le déplacement maximal selon l'axe Y est fixé à 1 μm, la longueur des ressorts à 290 μm, et leur épaisseur à 6 μm. De manière conventionnelle pour un dispositif de type « MEMS », la profondeur selon l'axe Z est de 60 μm et le matériau utilisé est le silicium.

Les résultats de ces calculs sont donnés ci-après sous la forme de régressions polynomiales à l'ordre 3 de l'effort $\varepsilon$ (en Newton) par rapport au déplacement y (en millimètre) selon l'axe Y, pour :

- la poutre console (figure 3A) :

$$\varepsilon = 2{,}6206\ y + 2{,}3065.10^{-38}\ y^2 + 49697\ y^3\ ;$$

- le ressort *« folded »* (figure 3B) :

$$\varepsilon = 2{,}6147\ y - 2{,}0498.10^{-38}\ y^2 + 64{,}223\ y^3\ ;$$

- la suspension deux axes (figure 3C) :

$$\varepsilon = 2{,}5669\ y + 14{,}055\ y^2 + 101{,}73\ y^3\ ;$$

- le dispositif de liaison 32A (figure 2), avec un empattement h de 10 μm :

$$\varepsilon = 2{,}5091\,y + 0{,}94931\,y^2 - 25{,}25\,y^3 \ ;$$

- le dispositif de liaison 32A, avec h=20 $\mu$m :

$$\varepsilon = 2{,}6030\,y + 0{,}24324\,y^2 + 0.045001\,y^3 \ ;$$

- le dispositif de liaison 32A, avec h=38 $\mu$m :

$$\varepsilon = 2{,}6484\,y + 0{,}073074\,y^2 + 40{,}100\,y^3.$$

Ces résultats confirment donc que le dispositif de liaison 32A permet de réduire la non-linéarité d'ordre 3, et cela de manière considérable moyennant un choix judicieux en ce qui concerne la valeur de l'empattement h (soit, dans l'exemple ci-dessus : h=20 $\mu$m).

De manière analogue, une réduction de la non-linéarité d'ordre 3 peut être obtenue même lorsque seul l'un des éléments de liaison 34A ou 36A est formé de plusieurs ressorts, l'autre pouvant être formé d'un unique ressort, tout au moins en ce qui concerne les déplacements induits par la déformation en flexion de celui parmi les éléments de liaison 34A, 36A qui est formé de plusieurs ressorts.

Par ailleurs, dans les modes de réalisation préférés de l'invention, le premier élément de liaison 34A et le deuxième élément de liaison 36A sont symétriques l'un de l'autre par rapport à un troisième plan P3 orthogonal au plan de mobilité P. Les deux éléments de liaison 34A et 36A sont donc en particulier semblables l'un à l'autre.

Il en résulte un deuxième avantage du dispositif de liaison 32A, résidant dans les propriétés d'isotropie de celui-ci. Par isotropie, il faut comprendre la faculté, pour le dispositif 32A, d'obéir à une loi de déplacement en fonction de l'effort appliqué, qui soit indépendante de la direction d'application de l'effort.

La configuration symétrique des deux éléments de liaison 34A et 36A et le fait que les déplacements en rotation du bloc de liaison 38A soient empêchés, ou tout au moins fortement limités, a en effet pour conséquence que les deux éléments de liaison 34A et 36A du dispositif de liaison 32A se comportent au premier ordre respectivement comme deux ressorts linéaires indépendants semblables l'un à l'autre, respectivement d'axe Y et d'axe X. La loi de déplacement en fonction de l'effort appliqué pour chacun de ces ressorts équivalents peut se déduire de la régression polynomiale ci-dessus concernant le ressort *« folded »*. Cette régression polynomiale fournit un coefficient d'ordre 2 négligeable et un coefficient d'ordre 3 modéré, de sorte que pour les petits déplacements, cette loi peut effectivement être approximée, au premier ordre, par une relation de type :

- $F_y = k\,y$, en ce qui concerne le premier élément de liaison 34A, et
- $F_x = k\,x$, en ce qui concerne le deuxième élément de liaison 36A.

De ce fait, quelle que soit la direction selon laquelle le dispositif de liaison 32A est sollicité, la force élastique F exercée par le dispositif en réponse à une telle sollicitation correspond, au premier ordre, à la somme des forces $F_x$ et $F_y$ exercées par les ressorts linéaires équivalents respectivement selon l'axe X et selon l'axe Y, soit :

$$F = F_x + F_y = k\,x + k\,y = k\,(x+y)$$

Le dispositif de liaison 32A se comporte donc comme un ressort linéaire de même constante de raideur k vis-à-vis de toute sollicitation dans le plan de mobilité P. Par conséquent, ce dispositif obéit bien à une loi de déplacement en fonction de l'effort qui, au premier ordre, ne dépend pas de l'orientation de l'effort dans le plan de mobilité P.

Les figures 4 à 6 illustrent des variantes de réalisation du dispositif de liaison 32A, qui présentent des avantages de même nature que ceux décrits ci-dessus en ce qui concerne le dispositif de la figure 2.

Ainsi, dans l'exemple illustré sur la figure 4, chaque élément de liaison 34A, 36A comporte un nombre de ressorts 40, 42 supérieur ou égal à trois. Cela permet d'accroître encore la raideur en rotation au niveau du bloc de liaison 38A.

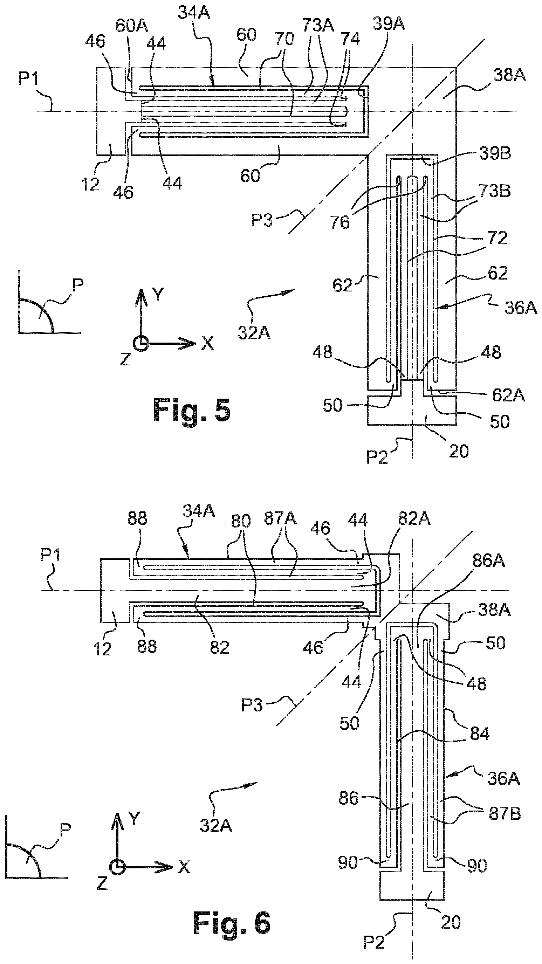

Dans un deuxième mode de réalisation de l'invention, illustré sur la figure 5, chacun des premier et deuxième éléments de liaison 34A, 36A s'étend entre deux extensions 60, 62 correspondantes du bloc de liaison 38A, à savoir deux extensions 60 s'étendant en regard l'une de l'autre à partir de la première face 39A du bloc de liaison 38A, et deux extensions 62 s'étendant en regard l'une de l'autre à partir de la deuxième face 39B du bloc de liaison 38A.

De plus, les ressorts 70, 72 de chaque élément de liaison 34A, 36A sont au nombre de deux et sont chacun en forme de lame ou de poutre repliée. Autrement dit, ces ressorts sont du type dit « folded » et sont donc analogues au ressort de la figure 3B. La première extrémité 44 de chaque ressort 70 du premier élément de liaison 34A est reliée à la masse mobile 12 et la seconde extrémité 46 de chaque ressort 70 est reliée à une extension 60 correspondante du bloc de liaison 38A, par exemple à une extrémité distale 60A de l'extension 60. De manière analogue, la première extrémité 48 de chaque ressort 72 du deuxième élément de liaison 36A est reliée au support 20 et la seconde extrémité 50 de chaque ressort 72 est reliée à une extension 62 correspondante du bloc de liaison 38A, par exemple à une extrémité distale 62A de l'extension 62.

Comme le montre la figure 5, chaque ressort 70 présente ainsi une forme allongée selon une direction parallèle au premier plan P1. De manière analogue, chaque ressort 72 présente une forme allongée selon une direction parallèle au deuxième plan P2.

De manière préférentielle, chaque ressort 70 comporte deux portions rectilignes 73A de même longueur, s'étendant parallèlement au premier plan P1 et raccordées l'une à l'autre au niveau de la pliure 74 du ressort. De manière analogue, chaque ressort 72 comporte deux portions rectilignes 73B de même longueur, s'étendant parallèlement au deuxième plan P2 et raccordées l'une à l'autre au niveau de la pliure 76 du ressort. Les extrémités 44 et 46 sont ainsi agencées en regard les unes des autres. Il en est de même en ce qui concerne les extrémités 48 et 50.

Dans l'exemple illustré, les pliures 74 respectives des ressorts 70 du premier élément de liaison 34A sont raccordées l'une à l'autre. Il en est de même en ce qui concerne les pliures 76 respectives des ressorts 72 du deuxième élément de liaison 36A. Cette configuration permet de contraindre les ressorts 70 (respectivement 72) à travailler en parallèle et limiter les degrés de liberté du dispositif de liaison 32A.

Dans un troisième mode de réalisation de l'invention, illustré sur la figure 6, les ressorts 80, 82 de chacun des premier et deuxième éléments de liaison 34A, 36A sont au nombre de deux. De plus, les ressorts 80 du premier élément de liaison 34A s'étendent de part et d'autre d'une extension 82 de la masse mobile 12, tandis que les ressorts 84 du deuxième élément de liaison 36A s'étendent de part et d'autre d'une extension 86 du support 20. Ces ressorts 80, 84 sont chacun en forme de lame ou de poutre repliée. La seconde extrémité 46, 50 de chacun des ressorts 80, 84 est reliée au bloc de liaison 38A. De plus, la première extrémité 44 de chaque ressort 80 est reliée à l'extension 82 de la masse mobile 12, par exemple à une extrémité distale 82A de cette extension 82, tandis que la première extrémité 48 de chaque ressort 84 est reliée à l'extension 86 du support 20, par exemple à une extrémité distale 86A de cette extension 86.

Comme le montre la figure 6, chaque ressort 80 présente ainsi une forme allongée selon une direction parallèle au premier plan P1. De manière analogue, chaque ressort 84 présente une forme allongée selon une direction parallèle au deuxième plan P2.

De manière préférentielle, chaque ressort 80 comporte deux portions rectilignes 87A de même longueur, s'étendant parallèlement au premier plan P1, et raccordées l'une à l'autre au niveau de la pliure 88 du ressort. De manière analogue, chaque ressort 84 comporte deux portions rectilignes 87B de même longueur, s'étendant parallèlement au deuxième plan P2, et raccordées l'une à l'autre au niveau de la pliure 90 du ressort. Les extrémités 44 et 46 sont ainsi agencées en regard les unes des autres. Il en est de même en ce qui concerne les extrémités 48 et 50. Enfin, les pliures 88 des ressorts 80 sont agencées en regard de la masse mobile 12, tandis que les pliures 90 des ressorts 84 sont agencées en regard du support 20.

Dans l'ensemble des modes de réalisation préférés, les ressorts du premier élément de liaison 34A s'étendent d'un premier côté du bloc de liaison 38A tandis que les ressorts du deuxième élément de liaison 36A s'étendent d'un deuxième côté du bloc de liaison 38A.

Il est clair pour l'homme du métier que, pour que le dispositif de liaison 32A remplisse sa fonction comme expliqué ci-dessus, il est nécessaire que le bloc de liaison 38A ne soit relié qu'aux premier et deuxième éléments de liaison 34A, 36A, sans quoi le dispositif de liaison 32A ne serait pas en mesure de réaliser une suspension ou un couplage élastique entre la masse mobile 12 et le support 20. Autrement dit, le bloc de liaison 38A est indépendant de tout élément autre que les premier et deuxième éléments de liaison 34A, 36A.

La figure 1 illustre en particulier un exemple d'agencement de moyens de liaison 16, 18, 22 permettant de mettre à profit de manière optimale les propriétés de linéarité et d'isotropie des dispositifs de liaison au sein d'un système, tel qu'un capteur angulaire inertiel.

Dans le système 10 illustré, la masse mobile 12 est globalement de forme annulaire carrée et présente un premier plan de symétrie PS1 parallèle au premier plan P1 du premier dispositif de liaison 32A ainsi qu'un deuxième plan de symétrie PS2 parallèle au deuxième plan P2 du premier dispositif de liaison 32A. Ces plans de symétrie PS1 et PS2 sont orthogonaux au plan de mobilité P.

De plus, les moyens de suspension 16 de la masse mobile 12 comprennent en outre le deuxième dispositif de liaison 32B, semblable au premier dispositif de liaison 32A, et agencé de sorte que le premier élément de liaison 34B du deuxième dispositif de liaison 32B s'étende parallèlement au deuxième élément de liaison 36A du premier dispositif de liaison 32A, et de sorte que le premier et le deuxième dispositifs de liaison 32A, 32B soient symétriques l'un de l'autre par rapport à un quatrième plan P4 orthogonal au plan de mobilité P et au troisième plan P3. De plus, le quatrième plan P4 constitue un autre plan de symétrie (distinct des plans PS1 et PS2) pour la masse mobile 12, en l'occurrence un plan diagonal de la masse mobile 12.

Il est à noter que dans d'autres modes de réalisation avantageux dans lesquels seuls l'un des éléments de liaison de chacun des dispositifs de liaison 32A et 32B est formé de deux ressorts ou davantage, les dispositifs de liaison 32A et 32B peuvent être l'image l'un de l'autre par une symétrie axiale selon un axe orthogonal au plan de mobilité P et passant par le troisième plan P3 (cet axe correspondant par exemple à l'intersection entre le troisième plan P3 et le quatrième plan P4 de la figure 1).

Par ailleurs, les premier et deuxième dispositifs de liaison 32A, 32B sont agencés à proximité d'un coin 92 de la masse mobile 12. Dans l'exemple illustré, les moyens de suspension 16 sont agencés à l'intérieur de la masse mobile 12. Cette dernière comporte des décrochements de son bord intérieur 94, agencés aux quatre coins de ce dernier, et se rejoignant de manière à former, en chaque coin intérieur de la masse mobile 12, une protubérance 95 de section carrée. Cette protubérance 95 présente des côtés 96A, 96B respectivement parallèles aux côtés 12A, 12B de la masse mobile 12 et décalés par rapport à ces derniers, ainsi qu'un plan diagonal confondu avec un plan diagonal correspondant de la masse mobile 12. Les dispositifs de liaison 32A, 32B sont respectivement reliés aux côtés 96B, 96A de la protubérance 95 correspondante, symétriquement de part et d'autre du plan diagonal de cette protubérance 95, qui se confond avec le quatrième plan P4.

Les moyens de suspension 16 comprennent en outre les troisièmes dispositifs de liaison 32C semblables au premier dispositif de liaison 32A et tels que l'ensemble des premier, deuxième et troisièmes dispositifs de liaison 32A, 32B, 32C forme un premier motif 100 invariant par rotation de 90 degrés autour d'un centre d'inertie 102 de la masse mobile 12.

Les troisièmes dispositifs de liaison 32C sont par exemple répartis en trois paires de dispositifs, chaque paire étant semblable à la paire constituée des premier et deuxième dispositifs de liaison 32A, 32B et étant reliée à une protubérance 95 correspondante.

Le système 10 illustré fournit ainsi un exemple dans lequel les moyens de suspension 16 présentent un caractère globalement isotrope, en plus de leurs bonnes performances en matière de linéarité.

Par ailleurs, comme mentionné ci-dessus, le système 10 illustré comporte une autre masse mobile 14 de même masse que la masse mobile 12 et agencée de sorte que les centres d'inertie respectifs des deux masses mobiles 12 et 14 soient confondus. L'autre masse mobile 14 forme par exemple un anneau carré entourant la masse mobile 12. Cette dernière peut être une forme pleine ou ajourée. L'autre masse mobile 14 est reliée au support 20 par les moyens de suspension 18, et est couplée à la masse mobile 12 par les moyens de couplage élastique 22. Comme le montre la figure 1, les moyens de suspension 18 et les moyens de couplage élastique 22 sont agencés d'une manière analogue aux moyens de suspension 16 décrits ci-dessus et forment donc respectivement un deuxième motif et un troisième motif invariants par rotation de 90 degrés autour du centre d'inertie 102. La suspension de l'autre masse mobile 14 et le couplage élastique des deux masses mobiles 12, 14 présente ainsi également de bonnes performances en matière de linéarité ainsi qu'un caractère globalement isotrope.

Enfin, dans l'exemple décrit, les moyens d'actionnement 26 de l'autre masse mobile 14 sont conçus pour communiquer à cette dernière des oscillations en opposition de phase par rapport aux oscillations de la masse mobile 12 induites par les moyens d'actionnement 24 de cette dernière. De cette manière, le centre d'inertie global des deux masses mobiles 12, 14 demeure sensiblement statique en fonctionnement. Autrement dit, les moyens d'actionnement 24, 26 et les moyens de liaison 16, 18, 22 appliquent en permanence aux deux masses mobiles 12, 14 des efforts respectifs de même niveau et de sens opposés, ce qui permet un fonctionnement parfaitement équilibré du système 10.

Le capteur 10 peut ainsi non seulement être utilisé dans le mode « gyromètre », c'est-à-dire le mode de fonctionnement dans lequel la force de Coriolis appliquée aux deux masses mobiles 12, 14 est mesurée, mais également dans le mode « gyroscope », c'est-à-dire le mode de fonctionnement dans lequel une dérive angulaire de la direction des oscillations des deux masses mobiles 12, 14 permet de renseigner directement sur une rotation du capteur 10 autour d'un axe parallèle à la direction Z.

Bien entendu, la configuration du capteur 10 visible sur les figures 1 et 1A n'est donnée qu'à titre d'exemple illustratif, et d'autres types de capteurs, ou plus généralement de systèmes, peuvent mettre à profit le dispositif de liaison proposé par l'invention. Il peut s'agir par exemple de capteurs équilibrés dont les deux masses mobiles sont agencées côte-à-côte, et/ou de capteurs dont les deux masses mobiles sont couplées au moyen de dispositifs de couplage mécaniques, ou encore de capteurs n'ayant qu'une unique masse mobile ou ayant trois masses mobiles ou davantage, et/ou de capteurs dont le support est monté mobile par rapport à un bâti pour permettre la mise en œuvre de moyens actifs d'équilibrage. Il peut également s'agir de systèmes résonants divers, ou encore d'interrupteurs.

Dans l'application particulièrement avantageuse décrite ci-dessus, il apparaît donc clairement que l'utilisation de dispositifs de liaison linéaires et isotropes permet de réaliser un résonateur de gyroscope vibrant ayant des modes de vibration dégénérés dans le plan. De plus la géométrie particulière des dispositifs de liaison décrits ci-dessus permet d'orienter les modes propres préférentiellement selon les axes géométriques du résonateur et de rendre cette orientation relativement insensible aux éventuels défauts locaux de réalisation susceptibles d'introduire des dissymétries dans les ressorts.

## Revendications

1. Système (10) de suspension d'une masse mobile, comprenant :

   - au moins une masse mobile (12),
   - des moyens de liaison (16) reliant la masse mobile (12) à un autre élément du système, tel qu'un support (20) ou une autre masse mobile (14), de manière à autoriser la masse mobile (12) à se mouvoir dans un plan (P), dit « plan de mobilité », relativement audit autre élément (20, 14) du système,

   **caractérisé en ce que** les moyens de liaison (16) comprennent un premier dispositif de liaison (32A) comportant un premier élément de liaison (34A) relié à la masse mobile (12), un deuxième élément de liaison (36A) relié audit autre élément du système (20, 14), et un bloc de liaison (38A) reliant le premier élément de liaison (34A) au deuxième élément de liaison (36A),

dans lequel, lorsque la masse mobile (12) est dans une position de repos, les premier et deuxième éléments de liaison (34A, 36A) sont respectivement centrés par rapport à un premier plan (P1) et un deuxième plan (P2) qui sont orthogonaux au plan de mobilité (P) et qui sont sécants,

dans lequel le premier élément de liaison (34A) est déformable en flexion dans le plan de mobilité (P) de manière à permettre un déplacement de la masse mobile (12) relativement au bloc de liaison (38A) selon une première direction (Y) orthogonale au premier plan (P1), à partir de la position de repos, et le deuxième élément de liaison (36A) est déformable en flexion dans le plan de mobilité (P) de manière à permettre un déplacement dudit autre élément du système (20, 14) relativement au bloc de liaison (38A) selon une deuxième direction (X) orthogonale au deuxième plan (P2), à partir de la position de repos,

et dans lequel au moins l'un des premier et deuxième éléments de liaison (34A ; 36A) est formé d'au moins deux ressorts (40, 70, 80 ; 42, 72, 84) ayant chacun une première extrémité (44 ; 48) reliée à la masse mobile (12), respectivement audit autre élément du système (20, 14), et une seconde extrémité (46 ; 50) reliée au bloc de liaison (38A).

2. Système selon la revendication 1, dans lequel l'autre des premier et deuxième éléments de liaison (36A ; 34A) est formé d'au moins deux ressorts (42, 72, 84 ; 40, 70, 80) ayant chacun une première extrémité (48 ; 44) reliée audit autre élément du système (20, 14), respectivement à la masse mobile (12), et une seconde extrémité (50 ; 46) reliée au bloc de liaison (38A).

3. Système selon la revendication 1 ou 2, dans lequel chacun des ressorts (40, 42) de l'un au moins des premier et deuxième éléments de liaison (34A, 36A) est en forme de lame ou de poutre rectiligne.

4. Système selon la revendication 3, dans lequel le nombre de ressorts (40, 42) de l'un au moins des premier et deuxième éléments de liaison (34A, 36A) est supérieur ou égal à trois.

5. Système selon la revendication 1 ou 2, dans lequel l'un au moins des premier et deuxième éléments de liaison (34A, 36A) s'étend entre deux extensions (60, 62) correspondantes du bloc de liaison (38A), et les ressorts (70, 72) de cet élément de liaison sont au nombre de deux et sont chacun en forme de lame ou de poutre repliée dont la première extrémité (44, 48) est reliée à la masse mobile (12) ou audit autre élément (20, 14) du système et dont la seconde extrémité (46, 50) est reliée à l'une des extensions (60, 62) du bloc de liaison (38A).

6. Système selon la revendication 1 ou 2, dans lequel les ressorts (80, 84) de l'un au moins des premier et deuxième éléments de liaison (34A, 36A) sont au nombre de deux et s'étendent de part et d'autre d'une extension (82, 86) correspondante de la masse mobile (12) ou dudit autre élément (20, 14) du système, et ces ressorts sont chacun en forme de lame ou de poutre repliée dont la première extrémité (44, 48) est reliée à l'extension (82, 86) de la masse mobile (12) ou dudit autre élément (20, 14) du système et dont la seconde extrémité (46, 50) est reliée au bloc de liaison (38A).

7. Système selon l'une quelconque des revendications 1 à 6, dans lequel les première et deuxième directions (Y, X) font entre elles un angle de 90 degrés.

8. Système selon l'une quelconque des revendications 1 à 7, dans lequel le premier élément de liaison (34A) et le deuxième élément de liaison (36A) du premier dispositif de liaison (32A) sont symétriques l'un de l'autre par rapport à un troisième plan (P3) orthogonal au plan de mobilité (P).

9. Système selon la revendication 8, dans lequel les moyens de liaison (16) comprennent en outre :

- un deuxième dispositif de liaison (32B) semblable au premier dispositif de liaison (32A) et agencé de sorte que le premier élément de liaison (34B) du deuxième dispositif de liaison (32B) s'étende parallèlement au deuxième élément de liaison (36A) du premier dispositif de liaison (32A), et de sorte que le premier et le deuxième dispositifs de liaison (32A, 32B) soient symétriques l'un de l'autre par rapport à un quatrième plan (P4), orthogonal au plan de mobilité (P) et au troisième plan (P3) ; et
- des troisièmes dispositifs de liaison (32C) semblables au premier dispositif de liaison (32A) et tels que l'ensemble des premier, deuxième et troisièmes dispositifs de liaison (32A, 32B, 32C) forme un premier motif (100) invariant par rotation de 90 degrés autour d'un centre d'inertie (102) de la masse mobile (12).

10. Système selon l'une quelconque des revendications 1 à 9, dans lequel la masse mobile (12) présente un premier plan de symétrie (PS1) et un deuxième plan de symétrie (PS2) orthogonaux au plan de mobilité (P) et respectivement orthogonaux à la première direction (Y) et à la deuxième direction (X).

11. Système selon la combinaison des revendications 9 et 10, dans lequel la masse mobile (12) présente une section carrée dans le plan de mobilité (P), dont une diagonale appartient audit quatrième plan (P4) et dont deux côtés adjacents (12A, 12B) sont respectivement parallèles aux premier et deuxième plans de symétrie (PS1, PS2).

12. Système selon l'une quelconque des revendications 1 à 11, comprenant en outre des moyens d'actionnement (24) pour imprimer des oscillations à la masse mobile (12) dans le plan de mobilité (P).

13. Capteur angulaire inertiel, formé d'un système selon la revendication 12 qui comprend en outre des moyens de détection (28) pour mesurer le déplacement de la masse mobile (12) dans le plan de mobilité (P).

14. Capteur angulaire inertiel selon la revendication 13, comprenant un support (20) qui forme ledit autre élément du système, et auquel les moyens d'actionnement (24) sont fixés.

15. Capteur angulaire inertiel selon la revendication 13, comprenant une autre masse mobile (14) qui forme ledit autre élément du système, le système étant configuré pour appliquer aux deux masses mobiles (12, 14) des efforts opposés dans le plan de mobilité (P).

**Patentansprüche**

1. System (10) zur Aufhängung einer beweglichen Masse, bestehend aus:

   - mindestens einer beweglichen Masse (12),
   - Verbindungsmitteln (16), die die bewegliche Masse (12) mit einem anderen Element des Systems wie z. B. einem Halter (20) oder einer weiteren beweglichen Masse (14) dergestalt verbinden, dass sie es der beweglichen Masse (12) ermöglichen, sich in einer Ebene (P), "Beweglichkeitsebene" genannt, relativ zu dem genannten anderen Element (20, 14) des Systems zu bewegen,

   **dadurch gekennzeichnet, dass** die Verbindungsmittel (16) eine erste Verbindungsvorrichtung (32A) umfassen, die ein erstes Verbindungselement (34A) aufweist, das mit der beweglichen Masse (12) verbunden ist, ein zweites Verbindungselement (36A) aufweist, das mit dem genannten anderen Element (20, 14) des Systems verbunden ist, und einen Verbindungsblock (38A) aufweist, der das erste Verbindungselement (34A) mit dem zweiten Verbindungselement (36A) verbindet, bei dem, wenn sich die bewegliche Masse (12) in einer Ruhestellung befindet, das erste und das zweite Verbindungselement (34A, 36A) zentriert sind bezogen auf eine erste Ebene (P1) bzw. eine zweite Ebene (P2), welche senkrecht zur Beweglichkeitsebene (P) liegen und sich schneiden, bei dem das erste Verbindungselement (34A) in der Beweglichkeitsebene (P) dergestalt verbiegbar ist, dass es eine Verschiebung der beweglichen Masse (12) relativ zu dem Verbindungsblock (38A) ermöglicht, und zwar aus der Ruhestellung heraus in einer ersten Richtung (Y) im rechten Winkel zu der ersten Ebene (P1), und bei dem das zweite Verbindungselement (36A) in der Beweglichkeitsebene (P) dergestalt verbiegbar ist, dass es eine Verschiebung des genannten anderen Elements (20, 14) des Systems relativ zu dem Verbindungsblock (38A) ermöglicht, und zwar aus der Ruhestellung heraus in einer zweiten Richtung (X) im rechten Winkel zu der zweiten Ebene (P2), und bei dem zumindest eines der ersten und zweiten Verbindungselemente (34A, 36A) aus mindestens zwei Federn (40, 70, 80; 42, 72, 84) gebildet ist, die jeweils mit einem ersten Ende (44; 48) mit der beweglichen Masse (12) bzw. mit dem genannten anderen Element (20, 14) des Systems verbunden sind und mit einem zweiten Ende (46; 50) mit dem Verbindungsblock (38A) verbunden sind.

2. System nach Anspruch 1, bei dem das andere der ersten und zweiten Verbindungselemente (36A, 34A) aus mindestens zwei Federn (42, 72, 84; 40, 70, 80) gebildet ist, die jeweils mit einem ersten Ende (48; 44) mit dem genannten anderen Element (20, 14) des Systems bzw. mit der beweglichen Masse (12) verbunden sind und mit einem zweiten Ende (50; 46) mit dem Verbindungsblock (38A) verbunden sind.

3. System nach Anspruch 1 oder 2, bei dem jede der Federn (40, 42) des mindestens einen der ersten und zweiten Verbindungselemente (34A, 36A) in der Form eines geradlinigen Stabs oder Trägers ausgeführt ist.

**4.** System nach Anspruch 3, bei dem die Anzahl der Federn (40, 42) des mindestens einen der ersten und zweiten Verbindungselemente (34A, 36A) größer oder gleich drei ist.

**5.** System nach Anspruch 1 oder 2, bei dem sich mindestens eines der ersten und zweiten Verbindungselemente (34A, 36A) zwischen zwei sich anschließenden Erweiterungen (60, 62) des Verbindungsblocks (38A) erstreckt, und die Federn (70, 72) dieses Verbindungselements zwei an der Zahl sind und jeweils in der Form eines umgebogenen Stabs oder Trägers ausgeführt sind, dessen erstes Ende (44, 48) mit der beweglichen Masse (12) oder mit dem genannten anderen Element (20, 14) des Systems verbunden ist und dessen zweites Ende (46; 50) mit einer der Erweiterungen (60, 62) des Verbindungsblocks (38A) verbunden ist.

**6.** System nach Anspruch 1 oder 2, bei dem die Federn (80, 84) mindestens eines der ersten und zweiten Verbindungselemente (34A, 36A) zwei an der Zahl sind und sich beiderseits einer sich anschließenden Erweiterung (82, 86) der beweglichen Masse (12) oder des genannten anderen Elements (20, 14) des Systems erstrecken, und diese Federn jeweils in der Form eines umgebogenen Stabs oder Trägers ausgeführt sind, dessen erstes Ende (44, 48) mit der Erweiterung (82, 86) der beweglichen Masse (12) oder des genannten anderen Elements (20, 14) des Systems verbunden ist und dessen zweites Ende (46, 50) mit dem Verbindungsblock (38A) verbunden ist.

**7.** System nach einem der Ansprüche 1 bis 6, bei dem die erste und die zweite Richtung (Y, X) einen Winkel von 90 Grad zueinander bilden.

**8.** System nach einem der Ansprüche 1 bis 7, bei dem das erste Verbindungselement (34A) und das zweite Verbindungselement (36A) der ersten Verbindungsvorrichtung (32A) bezogen auf eine dritte Ebene (P3), die rechtwinklig zur Beweglichkeitsebene (P) liegt, symmetrisch zueinander sind.

**9.** System nach Anspruch 8, bei dem die Verbindungsmittel (16) ferner umfassen:

- eine zweite Verbindungsvorrichtung (32B), die der ersten Verbindungsvorrichtung (32A) gleicht und dergestalt ausgeführt ist, dass das erste Verbindungselement (34B) der zweiten Verbindungsvorrichtung (32B) sich parallel zu dem zweiten Verbindungselement (36A) der ersten Verbindungsvorrichtung (32A) erstreckt, und dergestalt dass die erste und die zweite Verbindungsvorrichtung (32A, 32B) bezogen auf eine vierte Ebene (P4), die rechtwinklig zur Beweglichkeitsebene (P) und zur dritten Ebene (P3) liegt, symmetrisch zueinander sind, und

- dritte Verbindungsvorrichtungen (32C), die der ersten Verbindungsvorrichtung (32A) gleichen und dergestalt ausgeführt sind, dass die Gesamtheit der ersten, zweiten und dritten Verbindungsvorrichtungen (32A, 32B, 32C) ein erstes Muster (100) bildet, das bei 90-Grad-Drehung um ein Trägheitszentrum (102) der beweglichen Masse (12) invariant ist.

**10.** System nach einem der Ansprüche 1 bis 9, bei dem die bewegliche Masse (12) eine erste Symmetrieebene (PS1) und eine zweite Symmetrieebene (PS2) aufweist, die im rechten Winkel zur Beweglichkeitsebene (P) liegen und einen rechten Winkel zur ersten Richtung (Y) bzw. zur zweiten Richtung (X) bilden.

**11.** System nach den kombinierten Ansprüchen 9 und 10, bei dem die bewegliche Masse (12) in der Beweglichkeitsebene (P) einen quadratischen Querschnitt aufweist, dessen eine Diagonale in der genannten vierten Ebene (P4) liegt und dessen zwei aneinandergrenzende Seiten (12A, 12B) parallel zur ersten bzw. zur zweiten Symmetrieebene (PS1, PS2) verlaufen.

**12.** System nach einem der Ansprüche 1 bis 11, das ferner Betätigungsmittel (24) aufweist, um der beweglichen Masse (12) in der Beweglichkeitsebene (P) Schwingungen zu erteilen.

**13.** Trägheits-Winkelgeber, der von einem System nach Anspruch 12 gebildet ist und der ferner Erfassungsmittel (28) enthält, um die Bewegung der beweglichen Masse (12) in der Beweglichkeitsebene (P) zu messen.

**14.** Trägheits-Winkelgeber nach Anspruch 13, der einen Halter (20) aufweist, der das genannte andere Element des Systems bildet und an dem die Betätigungsmittel (24) befestigt sind.

**15.** Trägheits-Winkelgeber nach Anspruch 13, der eine weitere bewegliche Masse (14) aufweist, die das genannte andere Element des Systems bildet, wobei das System konfiguriert ist, um auf die beiden beweglichen Massen (12, 14) in der Beweglichkeitsebene (P) entgegengesetzte Kräfte auszuüben.

**Claims**

**1.** Mobile mass suspension system (10), comprising:

- at least one mobile mass (12),
- connection means (16) connecting the mobile mass (12) to another element of the system such as a support (20) or another mobile mass (14), so as to allow the mobile mass (12) to move in a plane (P) called the "mobility plane", relative to said other element (20, 14) of the system, **characterised in that** the connection means (16) comprise a first connection device (32A) comprising a first connection element (34A) connected to the mobile mass (12), a second connection element (36A) connected to said other element of the system (20, 14), and a connection block (38A) connecting the first connection element (34A) to the second connection element (36A),

in which, when the mobile mass (12) is in a rest position, the first and the second connection elements (34A, 36A) are centred with respect to a first plane (P1) and a second plane (P2) respectively that are orthogonal to the mobility plane (P) and that intersect,

in which the first connection element (34A) is deformable in bending in the mobility plane (P) so as to enable displacement of the mobile mass (12) relative to the connection block (38A) along a first direction (Y) orthogonal to the first plane (P1), starting from the rest position, and the second connection element (36A) is deformable in bending in the mobility plane (P) to enable relative displacement of said other element of the system (20, 14) relative to the connection block (38A) along a second direction (X) orthogonal to the second plane (P2), starting from the rest position,

and in which at least one of the first and second connection elements (34A; 36A) is formed from at least two springs (40, 70, 80; 42, 72, 84), each of which having a first end (44; 48) connected to the mobile mass (12), respectively to said other element of the system (20, 14), and a second end (46; 50) connected to the connection block (38A).

2. System according to claim 1, in which the other one of the first and second connection elements (36A; 34A) is formed from at least two springs (42, 72, 84; 40, 70, 80), each of which having a first end (48; 44) connected to said other element of the system (20, 14), respectively to the mobile mass, and a second end (50; 46) connected to the connection block (38A).

3. System according to claim 1 or 2, in which each of the springs (40, 42) in at least one of the first and the second connection elements (34A, 36A) is in the form of a straight leaf or beam.

4. System according to claim 3, in which the number of springs (40, 42) in at least one of the first and second connection elements (34A, 36A) is greater than or equal to three.

5. System according to claim 1 or 2, in which at least one of the first and second connection elements (34A, 36A) extends between two corresponding extensions (60, 62) of the connection block (38A), and the springs (70, 72) in this connection element are two in number and are each is in the form of a folded leaf or beam, the first end (44, 48) of which is connected to the mobile mass (12) or said other element (20, 14) of the system and the second end (46, 50) of which is connected to one of the extensions (60, 62) of the connection block (38A).

6. System according to claim 1 or 2, in which the springs (80, 84) in at least one of the first and the second connection elements (34A, 36A) are two in number and extend on each side of a corresponding extension (82, 86) of the mobile mass (12) or of said other element (20, 14) of the system, and each of these springs is in the form of a folded leaf or beam, the first end (44, 48) of which is connected to the extension (82, 86) of the mobile mass (12) or of said other element (20, 14) of the system and the second end (46, 50) of which is connected to the connection block (38A).

7. System according to any one of claims 1 to 6, in which an angle between the first and second directions (Y, X) is 90 degrees.

8. System according to any one of claims 1 to 7, in which the first connection element (34A) and the second connection element (36A) of the first connection device (32A) are symmetric with each other about a third plane (P3) orthogonal to the mobility plane (P).

9. System according to claim 8, in which the connection means (16) also comprise:

- a second connection device (32B) similar to the first connection device (32A), arranged such that the first connection element (34B) of the second connection device (32B) extends parallel to the second connection element (36A) of the first connection device (32A), and such that the first and the second connection devices (32A, 32B) are symmetric with each other about a fourth plane (P4) orthogonal to the mobility plane (P) and to the third plane (P3); and
- third connection devices (32C) similar to the first connection device (32A) and such that the first, second and third connection devices (32A, 32B, 32C) form a first pattern 100 invariable by rotation of 90 degrees about a centre of inertia (102) of the mobile mass (12).

10. System according to any one of claims 1 to 9, in which the mobile mass (12) has a first plane of symmetry (PS1) and a second plane of symmetry (PS2) which are both orthogonal to the mobility plane (P) and are orthogonal to the first direction (Y) and the second direction (X) respectively.

11. System according to claims 9 and 10 combined, in which a cross-section of the mobile mass (12) in the mobility plane (P) is a square having a diagonal in said fourth plane (P4) and two adjacent sides (12A, 12B) parallel to the first and second planes of symmetry (PS1, PS2) respectively.

12. System according to any one of claims 1 to 11, further comprising actuation means (24) to impress oscillations on the mobile mass (12) in the mobility plane (P).

13. Inertial angular sensor, composed of a system according to claim 12 that also comprises detection means (28) to measure the displacement of the mobile mass (12) in the mobility plane (P).

14. Inertial angular sensor according to claim 13, comprising a support (20) that forms said other element of the system, and to which the actuation means (24) are fixed.

15. Inertial angular sensor according to claim 13, comprising another mobile mass (14) that forms said other element of the system, the system being configured to apply opposite forces in the mobility plane (P) to the two mobile masses (12, 14).

Fig. 1

10

92    95    12    12A

P2    P3

P1    38A
      96B    34A 32A
12B           36A
      96A    20

38B  34B  36B    P4
      32B    102
94    16    PS1
            PS2

P

Y
Z ⊙ → X

# Fig. 1A

**Fig. 2**

**Fig. 3A**

**Fig. 3B**

**Fig. 3C**

**Fig. 4**

Fig. 5

Fig. 6

## RÉFÉRENCES CITÉES DANS LA DESCRIPTION

**Documents brevets cités dans la description**

- WO 2014177542 A1
- WO 2015178117 A1